# EUROPÄISCHE PATENTANMELDUNG

(11) **EP 4 350 360 A1**
(43) Veröffentlichungstag der Anmeldung: **10.04.2024**
(21) Anmeldenummer: 22199926.1
(22) Anmeldetag: 06.10.2022
(51) Int. Cl.: G01P 15/08, B23Q 17/09, B23Q 17/12, G05B 19/4065

(54) **VERFAHREN ZUR ÄNDERUNG EINES BETRIEBSZUSTANDS EINER WERKZEUGMASCHINE UND WERKZEUGMASCHINE**

(71) Anmelder: Hilti Aktiengesellschaft, 9494 Schaan (LI)
(72) Erfinder: Wiederrich, Daniel, 86830 Schwabmünchen (DE); Eftekhari, Maryam, 86836 Untermeitingen (DE)
(74) Vertreter: Hilti Aktiengesellschaft Corporate Intellectual Property

(57) **Zusammenfassung**

Die vorliegende Erfindung betrifft verschiedene Verfahren zur Änderung eines Betriebszustands einer Werkzeugmaschine. Bei den erfindungsgemäßen Verfahren weist eine Werkzeugmaschine einen Beschleunigungssensor auf, wobei mit dem Beschleunigungssensor die Beschleunigung der Werkzeugmaschine in den drei Raumrichtungen erfasst werden kann. Basierend auf diesen Werten kann eine Gesamtbeschleunigung ermittelt werden, die mit einem Schwellwert a_drop verglichen werden kann. Die Werkzeugmaschine kann beispielsweise dann abgeschaltet werden oder einen Betriebszustand ändern, wenn die Gesamtbeschleunigung den Schwellwert a_drop länger als eine Zeitspanne t_drop unterschreitet. Gemäß einem alternativen Verfahren zur Änderung eines Betriebszustands einer Werkzeugmaschine kann die Werkzeugmaschine dann abgeschaltet werden oder einen Betriebszustand ändern, wenn die Gesamtbeschleunigung den Schwellwert a_drop länger als eine Zeitspanne t_min_drop_impact unterschreitet und einen zweiten Schwellwert a_impact innerhalb einer Zeitspanne t_post_drop_impact überschreitet. In einem zweiten Aspekt betrifft die Erfindung eine Werkzeugmaschine zur Durchführung eines der Verfahren zur Änderung eines Betriebszustands der Werkzeugmaschine.

## Beschreibung

Die vorliegende Erfindung betrifft verschiedene Verfahren zur Änderung eines Betriebszustands einer Werkzeugmaschine. Bei den erfindungsgemäßen Verfahren weist eine Werkzeugmaschine einen Beschleunigungssensor auf, wobei mit dem Beschleunigungssensor die Beschleunigung der Werkzeugmaschine in den drei Raumrichtungen erfasst werden kann. Basierend auf diesen Werten kann eine Gesamtbeschleunigung ermittelt werden, die mit einem Schwellwert a_drop verglichen werden kann. Die Werkzeugmaschine kann beispielsweise dann abgeschaltet werden oder einen Betriebszustand ändern, wenn die Gesamtbeschleunigung den Schwellwert a_drop länger als eine Zeitspanne t_drop unterschreitet. Gemäß einem alternativen Verfahren zur Änderung eines Betriebszustands einer Werkzeugmaschine kann die Werkzeugmaschine dann abgeschaltet werden oder einen Betriebszustand ändern, wenn die Gesamtbeschleunigung den Schwellwert a_drop länger als eine Zeitspanne t_min_drop_impact unterschreitet und einen zweiten Schwellwert a_impact innerhalb einer Zeitspanne t_post_drop_impact überschreitet. In einem zweiten Aspekt betrifft die Erfindung eine Werkzeugmaschine zur Durchführung eines der Verfahren zur Änderung eines Betriebszustands der Werkzeugmaschine.

### Hintergrund der Erfindung:

Werkzeugmaschinen weisen üblicherweise Schaltvorrichtungen zum Ein- oder Ausschalten der Werkzeugmaschine auf. Solche Schaltvorrichtungen oder Schalter für Werkzeugmaschinen können beispielsweise als Betätigungsschalter oder Schaltvorrichtungen mit Rastfunktion ausgebildet sein. Bei Betätigungsschaltern muss der Betätigungsschalter die ganze Zeit während des Betriebs der Werkzeugmaschine von einem Nutzer betätigt werden, um den Betrieb der Werkzeugmaschine zu gewährleisten. Wird ein solches Gerät fallen gelassen, schaltet es sich automatisch und selbständig aufgrund der fehlenden Betätigung ab. Auf diese Weise kann das Sicherheitsrisiko, das von einer solchen herabfallenden Werkzeugmaschine ausgehen kann, deutlich reduziert werden.

Bei Werkzeugmaschinen, die mit einer Schaltvorrichtung mit Rastfunktion ausgestattet sind, kann eine solche automatische und selbständige Abschaltung auf diese Weise nicht realisiert werden, da das Gerät auch beim Herabfallen weiter aktiv bleibt und das Werkzeug der Werkzeugmaschine in Bewegung, zumeist Rotation, bleibt.

Im Stand der Technik sind verschiedene Methoden bekannt, um solche Werkzeugmaschinen mit einer Schaltvorrichtung mit Rastfunktion im Falle eines Herunterfallens abzuschalten, abzubremsen oder anderweitig einen Betriebszustand der Werkzeugmaschine zu ändern.

Beispielsweise ist es im Stand der Technik bekannt, Sensoren im Griffbereich der Werkzeugmaschine vorzusehen, mit denen erkannt werden kann, ob das Gerät vom Nutzer gehalten wird oder nicht. Die Werkzeugmaschine kann nur dann betrieben werden, wenn die - zumeist kapazitiven - Sensoren erkennen, dass eine aktive Betätigung des Geräts durch einen Nutzer gewährleistet ist, d.h. wenn der Nutzer die Werkzeugmaschine sicher hält und die Berührung der Werkzeugmaschine mit den Sensoren im Handgriff der Werkzeugmaschine erkannt wird. Solche Sensoren basieren häufig auf Kapazitätsmessungen und sind mit dem Nachteil verbunden, dass die Hand des Nutzers sehr genau über den entsprechenden Sensoren am Griff der Werkzeugmaschine liegen muss, um erkannt zu werden. Darüber hinaus können Verschmutzungen oder das Tragen eines Handschuhs die Erkennung der Hand des Nutzers erschweren. Darüber hinaus hat sich gezeigt, dass die Integration von Sensoren im häufig bauraumarmen Handgriff der Werkzeugmaschine sehr aufwändig und umständlich sein kann.

Die Aufgabe, die der vorliegenden Erfindung zugrunde liegt, besteht darin, die vorstehend beschriebenen Mängel und Nachteile des Standes der Technik zu überwinden und ein Verfahren zur Änderung eines Betriebszustands einer Werkzeugmaschine bereitzustellen, mit dem Gefahrensituationen sicher erkannt und beispielsweise eine Abschaltung der Werkzeugmaschine schnell und sicher herbeigeführt werden kann. Die Fachwelt würde es begrüßen, wenn die bereitzustellende Lösung besonders einfach, unkompliziert und ohne großen Aufwand in der Werkzeugmaschine implementiert werden könnte. Darüber hinaus soll im Kontext der Erfindung eine Werkzeugmaschine zur Durchführung des Verfahrens bereitgestellt werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zur Änderung eines Betriebszustands einer Werkzeugmaschine vorgesehen. Das Verfahren zur Änderung eines Betriebszustands einer Werkzeugmaschine ist durch folgende Verfahrensschritte gekennzeichnet:
a) Bereitstellung einer Werkzeugmaschine mit einem Beschleunigungssensor,
b) Erfassung einer Beschleunigung der Werkzeugmaschine in den drei Raumrichtungen, wodurch die Beschleunigungswerte x, y und z erhalten werden,
c) Ermittlung einer Gesamtbeschleunigung der Werkzeugmaschine Gesamtbeschleunigung basierend auf den Beschleunigungswerten x, y und z,
d) Vergleich der Gesamtbeschleunigung mit einem Schwellwert a_drop,
e) Änderung eines Betriebszustands der Werkzeugmaschine, wenn die Gesamtbeschleunigung den Schwellwert a_drop länger als eine Zeitspanne t_drop unterschreitet.

Vorteilhafterweise können mit diesem Verfahren Fallhöhen ab einer Höhe von 45 cm besonders sicher erkannt werden. Bei den Verfahren zur Änderung eines Betriebszustands der Werkzeugmaschine kann es sich beispielsweise um ein Verfahren zur Abschaltung der Werkzeugmaschine handeln, wenn beispielsweise eine Gefahrensituation erkannt wird. Die Gefahrensituation kann beispielsweise darin bestehen, dass die Werkzeugmaschine auf den Erdboden fällt, was im laufenden Betrieb offensichtlich zu einer Gefährdung des Nutzers oder umstehender Personen führen kann. Neben der Abschaltung der Werkzeugmaschine kann eine Änderung eines Betriebszustands der Werkzeugmaschine auch darin bestehen, dass die Werkzeugmaschine oder ihr Werkzeug abgebremst wird, so dass beispielsweise der Motor der Werkzeugmaschine mit einer geringeren Drehzahl oder Geschwindigkeit rotiert oder dass sich das Werkzeug der Werkzeugmaschine langsamer dreht. Darüber hinaus kann bei einer Änderung eines Betriebszustands der Werkzeugmaschine auch ein anderer Betriebsmodus eingeschaltet werden.

Die Änderung des Betriebszustands der Werkzeugmaschine bzw. die Abschaltung der Werkzeugmaschine kann vorteilhafterweise noch in der Luft erfolgen, so dass eine Verletzung des Nutzers der Werkzeugmaschine besonders sicher vermieden wird. Diese erste Ausgestaltung der Erfindung wird im Sinne der Erfindung bevorzugt auch als "Fall-Erkennung" ("drop detection") bezeichnet.

Im Folgenden wird die Erfindung in der Regel am Beispiel einer Abschaltung der Werkzeugmaschine erläutert. In diesem Ausführungsbeispiel betrifft die Erfindung ein Verfahren zur Abschaltung einer Werkzeugmaschine, wobei die Werkzeugmaschine abgeschaltet werden kann, wenn die Gesamtbeschleunigung den Schwellwert a_drop länger als eine Zeitspanne t_drop unterschreitet.

Mit der Erfindung kann auf die Vorsehung eines kapazitiven Sensors im Handgriff oder auf die aufwändige Integration von Sensoren im Gehäuse der Werkzeugmaschine verzichtet werden. Dadurch kann vorteilhafterweise die Elektronik der Werkzeugmaschine einfach gehalten werden und eine besonders kompakte und handliche Werkzeugmaschine bereitgestellt werden. Durch die softwareseitige Umsetzung eines Verfahrens zur Änderung eines Betriebszustands einer Werkzeugmaschine kann ein überraschend hohes Maß an zuverlässigen Abschaltungen im sicherheitsrelevanten Bedarfsfall erreicht werden.

Im Kontext der vorliegenden Erfindung wird eine Werkzeugmaschine mit mindestens einem Beschleunigungssensor bereitgestellt. Viele Werkzeugmaschine weisen bereits heute Beschleunigungssensoren auf, so dass im Kontext der vorliegenden Erfindung insbesondere solche Beschleunigungsdaten ausgewertet werden, die "eh schon" erhoben werden und daher zur Verfügung stehen. Diese häufig bereits vorhandenen Daten werden im Kontext der vorliegenden Erfindung einer zusätzlichen Verwertung zugeführt, indem sie als Grundlage für eine automatische und selbständige Abschaltung der Werkzeugmaschine verwendet werden. Im Kontext der vorliegenden Erfindung ist vorteilhafterweise kein zusätzlicher Aufwand zur Erfassung von Daten erforderlich, vielmehr werden oftmals "sowieso" vorhandene Daten noch besser ausgenutzt, indem diese Daten dazu beitragen, Abschaltbedingungen für die Werkzeugmaschine zu definieren.

Es ist im Sinne der Erfindung bevorzugt, dass in einer Ruheposition der Werkzeugmaschine die Erdbeschleunigung von g = 9,81 m/s² gemessen werden kann. Dabei können die Werte für die Erdbeschleunigung in den drei Raumrichtungen x, y und z beispielsweise wie folgt bestimmt werden: a_x = 0, a_y = 0 und a_z = g = 9,81 m/s². Es kann im Sinne der Erfindung auch bevorzugt sein, dass auf die ermittelten Werte ein Offset angewendet wird, um alle drei Werte für die Beschleunigung auf einen Wert "null" zu normieren. Es ist im Sinne der Erfindung bevorzugt, dass die weitere Auswertung der Daten in Abhängigkeit von der Bestimmungsmethode der Erdbeschleunigung in den drei Raumrichtungen durchgeführt wird. Je nachdem, ob ein Offset auf die Werte angewendet wird, kann sich die Ermittlung der Gesamtbeschleunigung bzw. die zugrundeliegenden Berechnungen, um die Voraussetzungen für eine Abschaltung der Werkzeugmaschine zu bestimmen, ändern. Ob ein Offset verwendet wird, um die Beschleunigungswerte x, y und z auf einen einheitlichen Wert, zum Beispiel 0 m/s², zu normieren, oder ob einer der Beschleunigungswerte, beispielsweise der Beschleunigungswert z, mit dem Wert der Erdbeschleunigung g = 9,81 m/s² gleichgesetzt wird, kann beispielsweise auch von dem Sensortyp abhängigen, der in der Werkzeugmaschine verwendet wird, um die die Beschleunigungswerte x, y und z zu ermitteln.

Im Kontext der vorliegenden Erfindung werden Beschleunigungsdaten oder-werte in den drei Raumrichtungen erhoben. Der Fachmann kennt die drei Raumrichtungen als Achsen eines dreidimensionalen karthesischen Koordinatensystems. Die Beschleunigungswerte werden im Sinne der Erfindung und um die Ausdrucksweise einfach zu halten als "x", "y" und "z" bezeichnet, wobei der Beschleunigungswert x verkürzend für die Beschleunigung a_x in x-Richtung steht, der Beschleunigungswert y verkürzend für die Beschleunigung a_y in y-Richtung steht und der Beschleunigungswert z verkürzend für die Beschleunigung a_z in z-Richtung steht.

In einem zweiten Aspekt betrifft die Erfindung eine Werkzeugmaschine zur Durchführung des vorgeschlagenen Verfahrens zur Änderung eines Betriebszustands der Werkzeugmaschine, wobei die Werkzeugmaschine neben dem mindestens einem Beschleunigungssensor eine Steuereinrichtung und/oder einen Prozessor zur Auswertung der Beschleunigungsdaten oder -werte umfasst. Mit anderen Worten weist die Werkzeugmaschine eine Steuereinrichtung und/ oder einen Prozessor auf, die/der zur Auswertung der von dem mindestens einen Beschleunigungssensor ermittelten Beschleunigungsdaten oder -werte ausgebildet ist. Die Steuereinrichtung und/oder der Prozessor der Werkzeugmaschine sind insbesondere dazu eingerichtet, basierend auf den Beschleunigungswerten x, y und z in den drei Raumrichtungen eine Gesamtbeschleunigung a der Werkzeugmaschine zu ermitteln. Die Gesamtbeschleunigung a der Werkzeugmaschine wird anschließend mit einem Schwellwert a_drop verglichen, wobei der Schwellwert a_drop vorzugsweise ein vorgegebener Schwellwert ist.

Die Formulierung, dass "der Schwellwert a_drop vorzugsweise ein vorgegebener Schwellwert ist", bedeutet im Sinne der Erfindung bevorzugt, dass der Schwellwert a_drop nicht von einem Nutzer der Werkzeugmaschine eingestellt werden kann, sondern beispielsweise von dem Hersteller der Werkzeugmaschine vorgegeben wird. Beispielsweise kann der Schwellwert a_drop in einem Speicher in der Steuereinrichtung oder in der Werkzeugmaschine hinterlegt sein. Dazu können beispielsweise Look-Up-Tabellen oder Ähnliches verwendet werden. Es kann im Sinne der Erfindung auch bevorzugt sein, dass Daten, wie Schwellwerte, im Rahmen eines Wartungs- oder Überarbeitungsprozesses nachträglich auf die Werkzeugmaschine aufgespielt werden. Auf diese Weise können beispielsweise aus Änderungen der Schwellwerte an die Werkzeugmaschine übertragen und neue Schwellwerte auf die Werkzeugmaschine aufgespielt werden.

Ein Betriebszustand der Werkzeugmaschine wird im Kontext der vorliegenden Erfindung dann geändert, wenn die Gesamtbeschleunigung der Werkzeugmaschine den Schwellwert a_drop länger als eine Zeitspanne t_drop unterschreitet. Vorzugsweise kann die Werkzeugmaschine insbesondere abgeschaltet werden, wenn die Gesamtbeschleunigung den Schwellwert a_drop länger als eine Zeitspanne t_drop unterschreitet.

Das Absinken der Gesamtbeschleunigung wird im Sinne der Erfindung bevorzugt als Herunterfallen der Werkzeugmaschine interpretiert, so dass die Werkzeugmaschine dann abgeschaltet werden kann, wenn ein Herunterfallen der Werkzeugmaschine detektiert wird. Das Herunterfallen der Werkzeugmaschine wird im Kontext der hier beschriebenen Ausgestaltung der Erfindung insbesondere dann angenommen, wenn die Gesamtbeschleunigung den Schwellwert a_drop länger als eine Zeitspanne t_drop unterschreitet, wobei die Zeitspanne t_drop vorzugsweise ebenfalls eine vorgegebene Zeitspanne darstellt. Die Zeitspanne t_drop kann beispielsweise im Bereich von 0,1 bis 1 Sekunde (s) liegen. Der Schwellwert a_drop kann beispielsweise zwischen 5 und 60 % des Ausgangswerts für die Gesamtbeschleunigung der Werkzeugmaschine liegen, wobei der Ausgangswert der Gesamtbeschleunigung insbesondere im Normalbetrieb der Werkzeugmaschine ermittelt wird.

Indem das Abschalten der Werkzeugmaschine bzw. eine Änderung eines Betriebszustands der Werkzeugmaschine durch eine geschickte Auswertung und Verarbeitung von dreidimensionalen Beschleunigungsdaten bewirkt wird, kann mit der Erfindung eine bedeutsame elektronische Sicherheitsfunktion bereitgestellt werden, wobei mit der Erfindung Fallsituationen der Werkzeugmaschine besonders sicher erkannt werden können. Bei Detektion eines Herabfallens der Werkzeugmaschine kann die Werkzeugmaschine bzw. ihr Werkzeug schnell zum Stopp gebracht werden, so dass ein Sicherheitsrisiko für den Nutzer minimiert werden kann. Es hat sich gezeigt, dass mit der Erfindung besonders frühzeitig erkannt werden kann, ob eine Werkzeugmaschine währen des Betriebs herunterfällt. Basierend auf dieser raschen Erkennung kann die Werkzeugmaschine im Falle eines Sturzes abgeschaltet werden, so dass gefährliche Situation vermieden werden. Die vorgeschlagene elektronische Sicherheitsfunktion ist gemäß der drop protection-Ausgestaltung der Erfindung dadurch gekennzeichnet, dass eine Abschaltung der Werkzeugmaschine bzw. eine Änderung des Betriebszustands der Werkzeugmaschine dann erfolgt, wenn die Gesamtbeschleunigung den Schwellwert a_drop unterschreitet und dieses Unterschreiten des Schwellwerts a_drop länger als eine Zeitspanne t_drop andauert. Dabei kann die Werkzeugmaschine vorzugweise bei Erreichen des Endes der Zeitspanne t_drop abgeschaltet werden, d.h. wenn ein Ende der Zeitspanne t_drop erreicht wird und die Gesamtbeschleunigung a noch immer unter dem Schwellwerts a_drop liegt. Alternativ kann ein Betriebszustand der Werkzeugmaschine geändert werden, wenn ein Ende der Zeitspanne t_drop erreicht wird und die Gesamtbeschleunigung a noch immer unter dem Schwellwerts a_drop liegt.

Es ist im Sinne der Erfindung bevorzugt, dass die mit dem Beschleunigungssensor ermittelten Beschleunigungsdaten vor ihrer Weiterverarbeitung, d.h. insbesondere vor der Berechnung der Gesamtbeschleunigung a, gefiltert werden.

Es ist im Sinne der Erfindung bevorzugt, dass die Zeitspanne t_drop einen Start-Zeitpunkt t_drop_start und einen Stop-Zeitpunkt t_drop_stop aufweist. Mit anderen Worten beginnt die Zeitspanne t_drop mit dem Start-Zeitpunkt t_drop_start und die Zeitspanne t_drop endet mit dem Stop-Zeitpunkt t_drop_stop. Das bedeutet im Sinne der Erfindung bevorzugt, dass die Zeitpunkte t_drop_start und t_drop_stop die Zeitspanne t_drop begrenzen und die Start- und End-Zeitpunkte der Zeitspanne t_drop darstellen. Die Werkzeugmaschine wird gemäß der drop protection-Ausgestaltung der Erfindung bei Erreichen des Stop-Zeitpunkts t_drop_stop abgeschaltet.

Es ist im Sinne der Erfindung bevorzugt, dass ein Zeitpunks t_drop_start erfasst und eine Zeiterfassung gestartet wird, wenn die Gesamtbeschleunigung a den Schwellwert a_drop unterschreitet. Mit anderen Worten kann eine Zeiterfassung zu laufen beginnen, wenn die Gesamtbeschleunigung a den Schwellwert a_drop unterschreitet. Mit noch anderen Worten wird der Start-Zeitpunkt einer vorgegebenen Zeitspanne t_drop erfasst, wobei der Start-Zeitpunkt t_drop_start dadurch gekennzeichnet ist, dass die Gesamtbeschleunigung a den Schwellwert a_drop unterschreitet. Die Abschaltung der Werkzeugmaschine bzw. eine Änderung eines Betriebszustands der Werkzeugmaschine erfolgt vorzugsweise am Stop-Zeitpunkt t_drop_stop der Zeitspanne t_drop, also an deren Ende.

In einer zweiten Ausgestaltung der Erfindung wird ein alternatives Verfahren zur Änderung eines Betriebszustands einer Werkzeugmaschine vorgestellt, wobei das alternative Verfahren durch die folgenden Verfahrensschritte gekennzeichnet ist:
a) Bereitstellung einer Werkzeugmaschine mit einem Beschleunigungssensor,
b) Erfassung einer Beschleunigung der Werkzeugmaschine in den drei Raumrichtungen, wodurch die Beschleunigungswerte x, y und z erhalten werden,
c) Ermittlung der Gesamtbeschleunigung,
d) Vergleich der Gesamtbeschleunigung mit einem ersten Schwellwert a_drop,
e) Änderung eines Betriebszustands der Werkzeugmaschine, wenn die der Gesamtbeschleunigung den Schwellwert a_drop länger als eine Zeitspanne t_min_drop_impact unterschreitet und die Gesamtbeschleunigung einen zweiten Schwellwert a_impact innerhalb einer Zeitspanne t_post_drop_impact überschreitet.

In dieser Ausgestaltung der Erfindung ist es vorgesehen, dass die Werkzeugmaschine dann ausgeschaltet wird oder einen Betriebszustand ändert, wenn die Gesamtbeschleunigung den Schwellwert a_drop länger als eine Zeitspanne t_min_drop_impact unterschreitet und die Gesamtbeschleunigung einen zweiten Schwellwert a_impact innerhalb einer Zeitspanne t_post_drop_impact überschreitet.

In dieser Ausgestaltung der Erfindung fällt die Gesamtbeschleunigung zunächst unter den ersten Schwellwert a_drop, wobei die Gesamtbeschleunigung in diesem Szenario den ersten Schwellwert a_drop nicht lange genug unterschreitet, um eine Abschaltung der Werkzeugmaschine oder eine Änderung eines Betriebszustands der Werkzeugmaschine zu bewirken. Die Gesamtbeschleunigung verbleibt länger als eine Zeitspanne t_min_drop_impact unterhalb des ersten Schwellwerts a_drop. Die Zeitspanne t_min_drop_impact kann beispielsweise im Bereich von 0,05 bis 0,5 s liegen. Die Zeitspanne t_min_drop_impact ist vorzugsweise deutlich kürzer als die Zeitspanne t_drop bei der ersten Ausgestaltung der Erfindung.

Wenn die Gesamtbeschleunigung nach Ablauf der Zeitspanne t_min_drop_impact wieder ansteigt und insbesondere den ersten Schwellwert a_drop überschreitet, startet ein neuer Zeitabschnitt, der im Kontext der Erfindung als t_post_drop_impact bezeichnet wird. Das Ansteigen der Gesamtbeschleunigung wird im Kontext der Erfindung vorzugsweise als Auffangen der Werkzeugmaschine durch den Nutzer oder als Aufschlag der Werkzeugmaschine auf einen Boden oder Untergrund interpretiert. Die Gesamtbeschleunigung steigt somit vorzugsweise dann an, wenn die Werkzeugmaschine aufgefangen wird oder auf einem Boden aufschlägt. Um auch in dieser Situation ein sicheres Abschalten zu gewährleisten, kann die Werkzeugmaschine bei dieser zweiten Ausgestaltung der Erfindung dann abgeschaltet werden oder einen Betriebszustand ändern, wenn die Gesamtbeschleunigung den zweiten Schwellwert a_impact innerhalb dieser Zeitspanne t_post_drop_impact überschreitet. Es ist im Sinne der Erfindung bevorzugt, dass das erneute bzw. rasche Ansteigen der Gesamtbeschleunigung nach Ablauf der Zeitspanne t_min_drop_impact als Auffangen oder Aufschlag der Werkzeugmaschine interpretiert wird. Die vorliegend beschriebene zweite Ausgestaltung der Erfindung wird im Sinne der Erfindung bevorzugt auch als "Fall-Aufschlag-Erkennung" ("drop & impact detection") bezeichnet, denn der rasche Anstieg der Gesamtbeschleunigung und die damit assoziierte Überschreitung des zweiten Schwellwerts a_impact sorgen vorteilhafterweise bei einem schlagartigen Abbremsen des Geräts, beispielsweise durch einen Aufschlag des Geräts, für eine sichere Abschaltung desselben. Es kann im Sinne der Erfindung auch bevorzugt sein, dass der rasche Anstieg der Gesamtbeschleunigung und die damit assoziierte Überschreitung des zweiten Schwellwerts a_impact als Ausgangspunkt für eine Änderung eines Betriebsmodus der Werkzeugmaschine verwendet wird. Beispielsweise kann die Werkzeugmaschine, ihr Werkzeug und/oder ihr Motor abgebremst werden, wenn ein rascher Anstieg der Gesamtbeschleunigung und eine Überschreitung des zweiten Schwellwerts a_impact festgestellt wird.

Es stellt einen wesentlichen Vorteil der Erfindung dar, dass die vorgeschlagenen Verfahren zur Änderung eines Betriebszustands einer Werkzeugmaschine besonders einfach in bestehende Software-Pakete integriert und umgesetzt werden können. Die Software bzw. die vorgeschlagenen Verfahren können beispielsweise in einer Steuereinrichtung oder einem Prozessor einer Werkzeugmaschine betrieben werden. Durch den einfachen Aufbau des Verfahrens ist für die Implementierung der Verfahren lediglich eine geringe CPU-Auslastung der Steuereinrichtung und/oder des Prozessors der Werkzeugmaschine erforderlich.

Es ist im Sinne der Erfindung bevorzugt, dass der erste Schwellwert a_drop kleiner ist als der zweite Schwellwert a_impact. Während der erste Schwellwert a_drop beispielsweise in einem Bereich von 5 bis 60 % eines Ausgangswerts der Gesamtbeschleunigung liegt, kann der zweite Schwellwert a_impact beispielsweise bei 150 % des Ausgangswerts der Gesamtbeschleunigung liegen. Es ist im Sinne der Erfindung bevorzugt, dass der zweite Schwellwert a_impact in einem Bereich von 100 bis 500 % des Ausgangswerts der Gesamtbeschleunigung liegt und ganz besonders bevorzugt in einem Bereich von 150 bis 300 % des Ausgangswerts der Gesamtbeschleunigung.

Es ist im Sinne der Erfindung bevorzugt, dass die Zeitspanne t_post_drop_impact dann startet, wenn die Gesamtbeschleunigung den ersten Schwellwert a_drop überschreitet. Es ist darüber hinaus im Sinne der Erfindung bevorzugt, dass die Zeitspanne t_min_drop_impact eine vorgegebene Zeitspanne ist.

Es ist im Sinne der Erfindung bevorzugt, dass die Zeitspanne t_min_drop_impact kürzer ist als die Zeitspanne Zeitspanne t_drop, so dass das alternative Verfahren zur Änderung eines Betriebszustands einer Werkzeugmaschine dann zum Einsatz kommt, wenn die Gesamtbeschleunigung den ersten Schwellwert a_drop nicht lang genug unterschreitet, weil zuvor ein Anstieg der Gesamtbeschleunigung detektiert wird.

In einem zweiten Aspekt betrifft die Erfindung eine Werkzeugmaschine zur Durchführung der vorgeschlagenen Verfahren. Die für die Verfahren zur Änderung eines Betriebszustands einer Werkzeugmaschine eingeführten Begriffe, Definitionen und technischen Vorteile gelten vorzugsweise für die Werkzeugmaschine analog. Die Werkzeugmaschine umfasst einen Beschleunigungssensor zur Erfassung von Beschleunigungsdaten und eine Steuereinrichtung zur Auswertung der mit dem Beschleunigungssensor erfassten Beschleunigungsdaten.

Es ist im Sinne der Erfindung bevorzugt, dass die Beschleunigungsdaten x, y und z in den drei Raumrichtungen erfasst werden, wobei basierend auf den Beschleunigungsdaten in den drei Raumrichtungen eine Gesamtbeschleunigung ermittelbar ist. Vorzugsweise kann die Werkzeugmaschine dann abgeschaltet werden, wenn die Gesamtbeschleunigung einen Schwellwert a_drop länger als eine Zeitspanne t_drop unterschreitet.

Es ist im Sinne der Erfindung bevorzugt, dass die Werkzeugmaschine dann abgeschaltet wird oder ihren Betriebszustand ändert, wenn die Gesamtbeschleunigung einen Schwellwert a_drop länger als eine Zeitspanne t_min_drop_impact unterschreitet und die Gesamtbeschleunigung einen zweiten Schwellwert a_impact innerhalb einer Zeitspanne t_post_drop_impact überschreitet.

Es ist im Sinne der Erfindung bevorzugt, dass ein Absinken der Gesamtbeschleunigung im Sinne der Erfindung bevorzugt als Herunterfallen der Werkzeugmaschine interpretiert wird. Je nach verwendetem Sensortyp zur Ermittlung der Beschleunigungswerte x, y und z kann es aber auch bevorzugt sein, dass ein Anstieg der Gesamtbeschleunigung als Herunterfallen der Werkzeugmaschine interpretiert wird.

Bei Verwendung eines entsprechenden Sensortyps kann die Gesamtbeschleunigung im Normalbetrieb der Werkzeugmaschine einen Wert von null oder nahe null annehmen. Wenn die Werkzeugmaschine herunterfällt, kann die Gesamtbeschleunigung in mindestens einer der Raumrichtungen auf einen Wert ungleich null ansteigen, beispielsweise auf einen Wert von 9,81 m/s², der der Erdbeschleunigung entspricht. Insbesondere in der "Fall-Aufschlag-Erkennung" ("drop & impact detection")-Ausgestaltung der Erfindung kann die Gesamtbeschleunigung anschließend wieder absinken, beispielsweise erneut auf einen Wert nahe null, um dann rasch anzusteigen. Die Werkzeugmaschine kann beispielsweise dann ausgeschaltet oder ihr Motor oder Werkzeug abgebremst werden, wenn die Gesamtbeschleunigung den zweiten Schwellwert a_impact überschreitet.

In dieser anderen Ausgestaltung der Erfindung, die sich beispielsweise aufgrund eines anderen Sensortyps zur Ermittlung der Beschleunigungswerte x, y und z ergeben kann, kann die Werkzeugmaschine beispielsweise dann abgeschaltet werden oder einen Betriebsmodus ändern, wenn die Gesamtbeschleunigung einen Schwellwert a_drop länger als eine Zeitspanne t_drop überschreitet. In der "Fall-Aufschlag-Erkennung" ("drop & impact detection")-Ausgestaltung der Erfindung kann die Werkzeugmaschine dann abgeschaltet werden oder ihren Betriebszustand ändern, wenn die Gesamtbeschleunigung einen Schwellwert a_drop länger als eine Zeitspanne t_min_drop_impact überschreitet und die Gesamtbeschleunigung einen zweiten Schwellwert a_impact innerhalb einer Zeitspanne t_post_drop_impact überschreitet.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: beispielhafter zeitlicher Verlauf der Gesamtbeschleunigung bei einer Fall-Erkennung gemäß der ersten Ausgestaltung der Erfindung («drop detection»)
- Fig. 2: beispielhafter zeitlicher Verlauf der Gesamtbeschleunigung bei einer Fall-Aufschlag-Erkennung gemäß der zweiten Ausgestaltung der Erfindung («drop & impact detection»)

### Ausführungsbeispiele und Figurenbeschreibung:

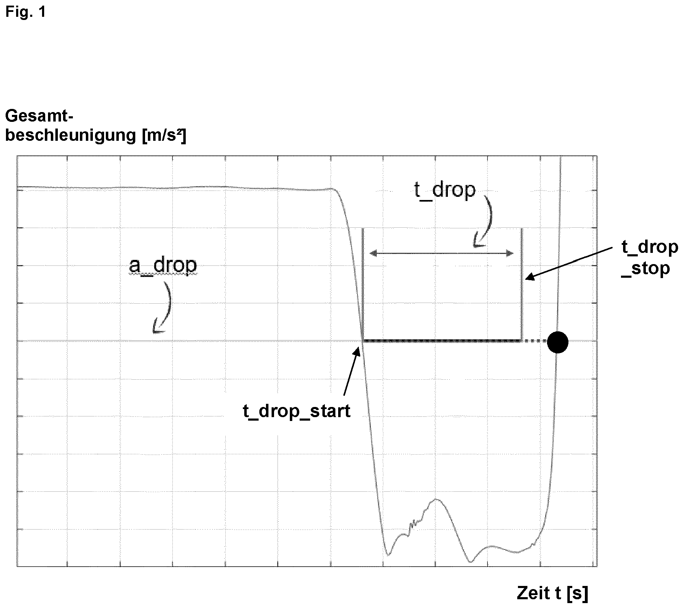

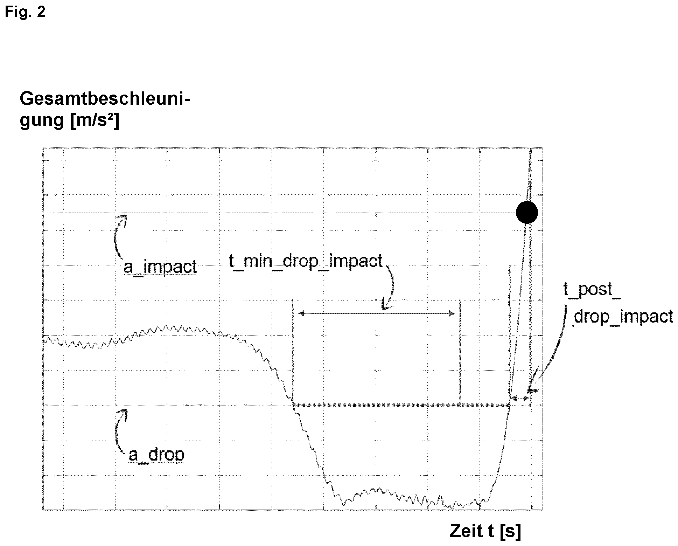

Figur 1 zeigt einen beispielhaften zeitlichen Verlauf der Gesamtbeschleunigung bei einer Fall-Erkennung gemäß der ersten Ausgestaltung der Erfindung («drop detection»). Auf der y-Achse der in Figur 1 abgebildeten Auftragung ist die Gesamtbeschleunigung aufgetragen, wobei die Gesamtbeschleunigung vorzugsweise in der Einheit Meter/(Sekunde)² oder m/s² angegeben wird. Auf der x-Achse ist die Zeit in der Einheit Sekunden (s) aufgetragen. Während des normalen Betriebs der Werkzeugmaschine liegt die Gesamtbeschleunigung bei einem beispielhaften Ausgangswert von ca. 10 m/s². Wenn die Werkzeugmaschine während ihres Betriebs zu Boden fällt, macht sich dies in dem zeitlichen Verlauf der Gesamtbeschleunigung als rascher Abfall der Gesamtbeschleunigung bemerkbar. Die Gesamtbeschleunigung kann bei einem Sturz bis auf einen Wert von ca. 0 m/s² abfallen. Wenn die Gesamtbeschleunigung unter den vorgegeben Schwellwert a_drop fällt, beginnt die Zeitspanne t_drop zu laufen, an deren Ende die Abschaltung der Werkzeugmaschine erfolgt oder die Werkzeugmaschine einen Betriebszustand ändert, beispielsweise indem die Werkzeugmaschine, ihr Werkzeug und/oder ihr Motor abgebremst wird. Das Abschalten der Werkzeugmaschine als Beispiel für einen Änderung des Betriebszustands der Werkzeugmaschine wird in den Figuren 1 und 2 durch einen schwarzen Punkt markiert. Der Schwellwert a_drop liegt bei dem in Figur 1 dargestellten Beispiel bei ca. 60 % des ursprünglichen Ausgangswert der Gesamtbeschleunigung. Es sind selbstverständlich auch andere Werte für den Schwellwert a_drop vorstellbar. Die Zeitspanne t_drop liegt bei dem in Figur 1 dargestellten Ausführungsbeispiel der ersten Ausgestaltung der Erfindung bei ca. 0,3 s.

Figur 2 zeigt einen beispielhaften zeitlichen Verlauf der Gesamtbeschleunigung bei einer Fall-Aufschlag-Erkennung gemäß der ersten Ausgestaltung der Erfindung («drop & impact detection»). Bei der in Figur 2 dargestellten Auftragung sind dieselben Größen Gesamtbeschleunigung in der Einheit m/s² und Zeit in der Einheit Sekunden (s) aufgetragen. Neben dem ersten Schwellwert a_drop sind in der Figur 2 die Zeitspannen t_min_drop_impact und t_post_drop_impact, sowie der zweite Schwellwert a_impact abgebildet. Der zweite Schwellwert a_impact ist in dem in Figur 2 dargestellten Ausführungsbeispiel der zweiten Ausgestaltung der Erfindung deutlich größer als der erste Schwellwert a_drop.

Die Gesamtbeschleunigung sinkt zunächst durch das Herunterfallen der Werkzeugmaschine ab und nimmt beispielsweise einen Wert von ca. 0 m/s² ein. Bei diesem Absinken der Gesamtbeschleunigung unterschreitet die Gesamtbeschleunigung den ersten Schwellwert a_drop, wodurch die erste Zeitspanne t_min_drop_impact zu Laufen beginnt. Die Zeitspanne t_min_ drop_impact ist vorzugsweise kürzer als die Zeitspanne t_drop der ersten Ausgestaltung der Erfindung und liegt beispielsweise bei 0,15 s. Wenn nach Ende der Zeitspanne t_min_drop_ impact die Gesamtbeschleunigung noch immer unter dem ersten a_drop liegt und anschließend wieder ansteigt - beispielsweise, weil die Werkzeugmaschine auf einem Untergrund aufschlägt - beginnt eine zweite Zeitspanne t_post_drop_impact zu Laufen. Die zweite Zeitspanne t_post_ drop_impact beginnt vorzugsweise dann zu Laufen, wenn die Gesamtbeschleunigung - von niedrigen Werten kommend - den ersten Schwellwert a_drop überschreitet. Der Aufprall oder Aufschlag der Werkzeugmaschine führt vorzugsweise zu einem sehr raschen Anstieg der Gesamtbeschleunigung, so dass die Gesamtbeschleunigung nach kurzer Zeit den zweiten, höheren Schwellwert a_impact schneidet und überschreitet. Zu diesem Zeitpunkt wird gemäß der zweiten Ausgestaltung der Erfindung die Werkzeugmaschine abgeschaltet oder ein Betriebszustand geändert, wobei ein Abschaltzeitpunkt in dieser zweiten Ausgestaltung der Erfindung vorzugsweise innerhalb der zweiten Zeitspanne t_post_drop_impact liegt. Auch in Figur 2 wird das Abschalten der Werkzeugmaschine oder eine Änderung des Betriebszustands der Werkzeugmaschine, wie ein Abbremsen, durch einen schwarzen Punkt markiert.

## Patentansprüche

1. Verfahren zur Änderung eines Betriebszustands einer Werkzeugmaschine, wobei das Verfahren **durch die folgenden Verfahrensschritte gekennzeichnet ist:**
a) Bereitstellung einer Werkzeugmaschine mit einem Beschleunigungssensor,
b) Erfassung einer Beschleunigung der Werkzeugmaschine in den drei Raumrichtungen, wodurch die Beschleunigungswerte x, y und z erhalten werden,
c) Ermittlung einer Gesamtbeschleunigung der Werkzeugmaschine basierend auf den Beschleunigungswerten x, y und z,
d) Vergleich der Gesamtbeschleunigung mit einem Schwellwert a_drop,
e) Änderung eines Betriebszustands der Werkzeugmaschine, wenn die Gesamtbeschleunigung den Schwellwert a_drop länger als eine Zeitspanne t_drop unterschreitet.

2. Verfahren nach Anspruch 1
**dadurch gekennzeichnet, dass**
das Absinken der Gesamtbeschleunigung als Herunterfallen der Werkzeugmaschine interpretiert wird.

3. Verfahren nach Anspruch 1 oder 2
**dadurch gekennzeichnet, dass**
die Gesamtbeschleunigung für die Zeitspanne t_drop auf Werte von weniger als 25 % eines ursprünglichen Ausgangswerts der Gesamtbeschleunigung abfällt.

4. Verfahren nach einem der vorhergehenden Ansprüche
**dadurch gekennzeichnet, dass**
die Zeitspanne t_drop in einem Bereich von 0,1 bis 1 s liegt.

5. Alternatives Verfahren zur Änderung eines Betriebszustands einer Werkzeugmaschine, wobei das Verfahren **durch die folgenden Verfahrensschritte gekennzeichnet ist:**
a) Bereitstellung einer Werkzeugmaschine mit einem Beschleunigungssensor,
b) Erfassung einer Beschleunigung der Werkzeugmaschine in den drei Raumrichtungen, wodurch die Beschleunigungswerte x, y und z erhalten werden,
c) Ermittlung einer Gesamtbeschleunigung der Werkzeugmaschine basierend auf den Beschleunigungswerte x, y und z,
d) Vergleich der Gesamtbeschleunigung mit einem ersten Schwellwert a_drop,
e) Änderung eines Betriebszustands der Werkzeugmaschine, wenn die Gesamtbeschleunigung den Schwellwert a_drop länger als eine Zeitspanne t_min_drop_impact unterschreitet und die Gesamtbeschleunigung einen zweiten Schwellwert a_impact innerhalb einer Zeitspanne t_post_drop_impact überschreitet.

6. Verfahren nach Anspruch 5
**dadurch gekennzeichnet, dass**
der erste Schwellwert a_drop kleiner ist als der zweite Schwellwert a_impact.

7. Verfahren nach Anspruch 5 oder 6
**dadurch gekennzeichnet, dass**
die Zeitspanne t_post_drop_impact dann startet, wenn die Gesamtbeschleunigung den ersten Schwellwert a_drop überschreitet.

8. Verfahren nach einem der Ansprüche 5 bis 7
**dadurch gekennzeichnet, dass**
die Zeitspanne t_min_drop_impact eine vorgegebene Zeitspanne ist.

9. Verfahren nach einem der Ansprüche 5 bis 8
**dadurch gekennzeichnet, dass**
das erneute Ansteigen der Gesamtbeschleunigung nach Ablauf der Zeitspanne t_min_drop_impact als Auffangen oder Aufschlag der Werkzeugmaschine interpretiert wird.

10. Verfahren nach einem der vorhergehenden Ansprüche
**dadurch gekennzeichnet, dass**
die Zeitspanne t_min_drop_impact kürzer ist als die Zeitspanne Zeitspanne t_drop, so dass das alternative Verfahren zur Änderung eines Betriebszustands einer Werkzeugmaschine dann zum Einsatz kommt, wenn die Gesamtbeschleunigung den ersten Schwellwert a_drop nicht lang genug unterschreitet, weil zuvor ein Anstieg der Gesamtbeschleunigung detektiert wird.

11. Werkzeugmaschine zur Durchführung der Verfahren nach einem der vorhergehenden Ansprüche, wobei die Werkzeugmaschine einen Beschleunigungssensor zur Erfassung von Beschleunigungsdaten und eine Steuereinrichtung zur Auswertung der mit dem Beschleunigungssensor erfassten Beschleunigungsdaten umfasst.

12. Werkzeugmaschine nach Anspruch 11
**dadurch gekennzeichnet, dass**
die Beschleunigungsdaten x, y und z in den drei Raumrichtungen erfasst werden, wobei basierend auf den Beschleunigungsdaten in den drei Raumrichtungen eine Gesamtbeschleunigung der Werkzeugmaschine ermittelbar ist.

13. Werkzeugmaschine nach Anspruch 11 oder 12
**dadurch gekennzeichnet, dass**
die Werkzeugmaschine abschaltbar ist, wenn die Gesamtbeschleunigung einen Schwellwert a_drop länger als eine Zeitspanne t_drop unterschreitet.

14. Werkzeugmaschine nach einem der Ansprüche 11 bis 13
**dadurch gekennzeichnet, dass**
die Werkzeugmaschine abschaltbar ist, wenn die Gesamtbeschleunigung einen Schwellwert a_drop länger als eine Zeitspanne t_min_drop_impact unterschreitet und die Gesamtbeschleunigung einen zweiten Schwellwert a_impact innerhalb einer Zeitspanne t_post_drop_impact überschreitet.
